# EUROPÄISCHE PATENTSCHRIFT

(11) **EP 2 476 684 B1**
(45) Veröffentlichungstag und Bekanntmachung des Hinweises auf die Patenterteilung: **19.07.2017**
(21) Anmeldenummer: 12150706.5
(22) Anmeldetag: 11.01.2012
(51) Int. Cl.: C07F 9/09, C07F 9/14

(54) **Verfahren zur Herstellung von Alkylphosphaten**
Method for manufacturing alkyl-phosphates
Procédé de fabrication de phosphates d'alkyle

(30) Priorität: 17.01.2011 EP 11151172
(43) Veröffentlichungstag der Anmeldung: 18.07.2012
(73) Patentinhaber: LANXESS Deutschland GmbH, 50569 Köln (DE)
(72) Erfinder: Hansel, Jan-Gerd, 51469 Bergisch Gladbach (DE)

(56) Entgegenhaltungen:
- DE-A1- 2 625 878

## Beschreibung

Die vorliegende Erfindung betrifft ein Verfahren zur Herstellung der Tetraalkylbisphosphate Tetramethyldiethylenglycolbisphosphat und Tetraethyldiethylenglycolbisphosphat durch Umsetzung bestimmter Tetrachlorbisphosphate mit Methanol oder Ethanol, Neutralisation des gebildeten Chlorwasserstoffs mit einer Base und Abtrennung des bei der Neutralisation gebildeten Salzes von der Reaktionsmischung als Feststoff.

Tetraalkylbisphosphate sind viskose, niedrigflüchtige Flüssigkeiten und finden seit langer Zeit technische Anwendungen, beispielsweise als Polymeradditive (siehe US 2,782,128) oder als Hydrauliköle (siehe US 4,056,480). Für diese Anwendungen ist es typischer Weise erforderlich, dass die Tetraalkylbisphosphate möglichst wenig Verunreinigungen enthalten. So sollte der Gehalt an sauren Verunreinigungen, wie er beispielsweise durch die Bestimmung der Säurezahl ermittelt werden kann, möglichst niedrig sein, da Säure zu beschleunigter Zersetzung oder Korrosion führen kann. Tetraalkylbisphosphate mit einer Säurezahl von größer als etwa 1,0 mg KOH/g sind für die genannten Anwendungen unbrauchbar. Ähnlich wie Säuren sind auch Verunreinigungen mit Basen unerwünscht, da sie bei der Anwendung in unerwünschter Weise als Katalysatoren fungieren können. Weiterhin ist der Gehalt an Elektrolyten unerwünscht, weil er ebenfalls Korrosionsprobleme verursachen kann oder zu Unverträglichkeit zwischen Tetraalkylbisphosphat und einer Polymermatrix führen kann. Gehalte an Metallionen von größer als etwa 5000 ppm, wie sie durch bekannte chromatographische oder spektroskopische Methoden ermittelt werden können, sind unerwünscht.

Verschiedene Verfahren zur Herstellung von Tetraalkylbisphosphaten sind bekannt. Sie weisen jedoch Mängel auf, indem die Vermeidung oder Abtrennung der oben genannten Verunreinigungen aufwändig und umständlich und so für eine großtechnische Produktion ungeeignet sind. Weiterhin liefern die bekannten Verfahren unbefriedigende Ausbeuten, was eine technisch aufwändige Abtrennung und Entsorgung von unverbrauchten Rohstoffen oder von Nebenprodukten erforderlich macht.

US 2,782,128 beschreibt ein Verfahren zur Herstellung von Tetraalkylbisphosphaten durch Umsetzung von Dialkylchlorphosphaten mit Diolen in Gegenwart von Pyridin. Das in der ersten Stufe der Synthesesequenz aus Phoshphortrichlorid, Alkohol und Chlor hergestellte Zwischenprodukt Dialkylchlorphosphat muss mit dem Lösungsmittel Benzol aufgearbeitet und dann im Vakuum destilliert werden. In der zweiten Stufe muss das Nebenprodukt Pyridinhydrochlorid durch Zugabe des Lösungsmittels Diethylether ausgefällt werden. Weiterhin müssen Reste des Pyridins mittels Salzsäure extrahiert werden und die Produktphase dann wieder mit Natronlauge säurefrei und mit Wasser neutral gewaschen werden. Schließlich ist die destillative Entfernuung des Lösungsmittels und von Wasserresten erforderlich. Die Gesamtausbeute über beide Stufen wird mit 74 - 77 % angegeben. Nachteilig an diesem Verfahren ist die Vielzahl der erforderlichen Aufarbeitungsoperationen, die mehrfache Verwendung von Lösungsmitteln sowie die nur mäßige Ausbeute.

Die Publikation "Diphosphate Ester Plasticizers" in Indust. Eng. Chem. 1950, Band 42, S. 488, beschreibt ein ähnliches Verfahren wie US 2,782,128 und gibt als Nachteile dieses Verfahrens an, dass die Ausbeute mit nur 50 % sehr niedrig sei und dass erhebliche Schwierigkeiten bei der Reinigung der Zwischenprodukte und des Endproduktes aufgetreten seien. Als Alternative wird ein besseres Verfahren beschrieben, in dem ein Diol in der ersten Stufe mit Phosphoroxychlorid zu einem Tetrachlorbisphosphat umgesetzt wird, welches dann in der zweiten Stufe mit dem Alkohol zum Endprodukt reagiert. Es wird erwähnt, dass die Ausbeuten zufriedenstellend seien, allerdings werden sie nicht angegeben. Zur Aufarbeitung des Reaktionsansatzes der zweiten Stufe wird Pyridin zugegeben, das ausgefallene Pyridinhydrochlorid abgesaugt und die Produktphase dann mit Wasser gewaschen. Schließlich müssen Pyridinreste im Vakuum entfernt werden.

Nachteilig an dieser Vorgehensweise ist zunächst die Schwierigkeit, die Pyridinreste vollständig aus dem Endprodukt zu entfernen. Die Abtrennung des Pyridinhydrochlorids vom Tetraalkylbisphosphat durch Filtration gelingt nur dann zufriedenstellend, wenn sich dieses im Tetraalkylbisphosphat nur wenig löst. Ein weiterer Nachteil ergibt sich aus der Tatsache, dass eine Wäsche der Produktphase mit Wasser durchgeführt wird. Ist das Tetraalkylbisphosphat teilweise mit Wasser mischbar, so sind Ausbeuteverluste bei dieser Operation unvermeidlich. Bei Tetraalkylbisphosphaten, die in jedem Verhältnis mit Wasser mischbar sind, versagt diese Wäsche vollständig, da eine Abtrennung des Produktes vom Abwasser durch Phasentrennung nicht möglich ist.

US 4,056,480 schlägt ein ähnliches Verfahren zur Herstellung von Tetraalkylbisphosphaten vor, bei dem ebenfalls ein Diol in der ersten Stufe mit Phosphoroxychlorid zu einem Tetrachlorbisphosphat umgesetzt wird, das in der zweiten Stufe mit dem Alkohol zum Endprodukt reagiert. Bei der Isolierung des Endprodukts wird anstelle von Pyridin eine verdünnte Natronlauge eingesetzt. Es bildet sich ein Gemisch, aus dem die flüssige Produktphase durch Phasentrennung abgetrennt werden kann. Nachdem aus der Produktphase der Alkoholüberschuss abdestilliert wurde, muss sie ein weiteres Mal mit Wasser gewaschen und schließlich im Vakuum von Wasserresten befreit werden. Die Aubeuten an Tetraalkylbisphosphaten betragen 12 - 74 %.

Nachteilig an diesem Verfahren sind wiederum die nur mäßige Ausbeute und der Umstand, dass das Verfahren mehrere Flüssig-flüssig-Phasentrennungen beinhaltet. Damit ist das Verfahren zur Herstellung von teilweise wasserlöslichen Tetraalkylbisphosphaten nur schlecht geeignet und zur Herstellung von vollständig wasserlöslichen Tetraalkylbisphosphaten gänzlich ungeeignet.

Aus DE-A 26 25 878 ist ein Verfahren zur Kraftübertragung bekannt, wobei die Kraft mittels einer hydraulischen Flüssigkeit die Bisphosphate einer bestimmten Struktur enthält, übertragen wird. Gemäß Beispiel 2 wird die Herstellung des nicht vollständig wasserlöslichen Tetra-n-butyldiethylenglycolbisphosphats durch Umsetzung von n-Butanol und Diethylenglycolbis(dichlorphosphat) mit 50%iger wäßriger NaOH und unter Zusatz einer größeren Menge Wasser beschrieben.

Es ist Aufgabe der vorliegenden Erfindung, ein Verfahren zur Herstellung von Tetramethyldiethylenglycolbisphosphat und Tetraethyldiethylenglycolbisphosphat zur Verfügung zu stellen, das gegenüber dem Stand der Technik einfacher durchführbar ist und bessere Ausbeuten liefert und zur Herstellung dieser vollständig wasserlöslichen Tetraalkylbisphosphate geeignet ist.

Überraschend wurde gefunden, dass sich Tetramethyldiethylenglycolbisphosphat und Tetraethyldiethylenglycolbisphosphat leicht und in guter Ausbeute herstellen lassen, wenn der bei der Umsetzung von Tetrachlorbisphosphaten mit Alkoholen gebildete Chlorwasserstoff mit einer Base neutralisiert wird und das bei der Neutralisation gebildete Salz als Feststoff aus der Reaktionsmischung abgetrennt wird.

Die genannte Aufgabe wird also gelöst durch ein Verfahren zur Herstellung von Tetramethyldiethylenglycolbisphosphat oder Tetraethyldiethylenglycolbisphosphat, dadurch gekennzeichnet, dass man
a) ein Tetrachlorbisphosphat der allgemeinen Formel (I) 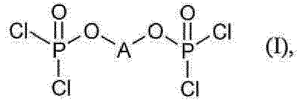 worin
   A für -CH₂CH₂-O-CH₂CH₂-steht, mit einem Alkohol ausgewählt aus der Reihe Methanol und Ethanol umsetzt,
b) wenn in Schritt a) mindestens 50 % der im Tetrachlorbisphosphat enthaltenen P-Cl-Gruppen umgesetzt wurden die Reaktionsmischung aus Schritt a) mit einer Base enthaltend eine 10 - 60 Gew.-%ige wässrige Lösung von Natriumhydroxid, Natriumcarbonat, Kaliumhydroxid und/oder Kaliumcarbonat oder ein pulverförmiges Natriumcarbonat, Natriumhydrogencarbonat, Kaliumcarbonat und/oder Kaliumhydrogencarbonat mit einer mittleren Teilchengröße von 0,1 µm bis 2000 µm, , umsetzt,
c) das in Schritt b) gebildeten Salz NaCl und/oder KCl bei einer Temperatur zwischen 5 °C und 70 °C und bei einem Druck zwischen 10 und 6000 mbar als Feststoff ausfällt und
d) den Feststoff NaCl und/oder KCl von der in Schritt c) erhaltenen Mischung abtrennt.

Der Begriff "Tetraalkylbisphosphate" bezeichnet organische Substanzen, die pro Molekül zwei Phosphorsäureestergruppen -O-P(=O)(OR)₂ enthalten, wobei R allgemein für Alkylreste steht und die in einem Molekül enthaltenen Alkylreste R gleich oder verschieden sein können. Der Begriff "vollständig oder teilweise wasserlöslich" bezeichnet im Zusammenhang mit der vorliegenden Erfindung solche Substanzen, deren Löslichkeit in Wasser bei 25 °C größer als etwa 1 Gewichtsprozent beträgt. Der Begriff "Tetrachlorbisphosphate" bezeichnet organische Substanzen, die pro Molekül zwei Phosphorsäureesterdichloridgruppen -O-P(=O)Cl₂ enthalten.

Die im erfindungsgemäßen Verfahren eingesetzten Tetrachlorbisphosphate lassen sich nach bekannten Methoden herstellen, wie sie beispielsweise in Indust. Eng. Chem. 1950, Band 42, S. 488 oder in US 4,056,480 beschrieben sind.

Bei der Durchführung des Schrittes a) des erfindungsgemäßen Verfahrens werden mindestens 4 mol-Äquivalente Alkohol pro 1 mol-Äquivalent Tetrachlorbisphosphat eingesetzt. Die Reaktanden können in Substanz oder in einem Lösungsmittel gelöst miteinander umgesetzt werden. Geeignete Lösungsmittel sind Toluol, Heptan und Dichlormethan sowie der in die Reaktion eingesetzte Alkohol im Überschuss. Das Tetrachlorbisphosphat wird in einem Reaktionsgefäß vorgelegt und der Alkohol wird zudosiert. Alternativ legt man den Alkohol in einem Reaktionsgefäß vor und dosiert das Tetrachlorbisphosphat zu. Es ist auch möglich, Alkohol und Tetrachlorbisphosphat parallel in ein Reaktionsgefäß zu dosieren. Anstelle der reinen Reaktanden können auch Lösungen der Reaktanden dosiert werden.

In der dann ablaufenden Umsetzung werden die P-Cl-Gruppen des Tetrachlorbisphosphats durch Reaktion mit dem Alkohol in P-OR-Gruppen überführt und es wird Chlorwasserstoff freigesetzt.

Die Umsetzung wird bevorzugt bei Temperaturen zwischen -10 °C und +70 °C und bei Drücken zwischen 10 und 6000 mbar durchgeführt. Dabei werden die Reaktanden durch geeignete Maßnahmen miteinander in Kontakt gebracht, insbesondere durch Rühren.

Bevorzugt wird der in der Reaktion als Nebenprodukt gebildete Chlorwasserstoff im Wesentlichen in der Reaktionsmischung belassen und in Schritt b) des Verfahrens mit der Base neutralisiert. In einer alternativen, ebenfalls bevorzugten Ausführungsform des Verfahrens wird der als Nebenprodukt gebildete Chlorwasserstoff zumindest teilweise aus dem Reaktionsgefäß ausgeschleust. Dazu wird beispielsweise Vakuum angelegt oder ein inertes Gas wie Stickstoff oder Kohlendioxid durch das Reaktionsgefäß geleitet.

In einer alternativen Ausführungsform kann der Schritt a) weitere, optionale Trennoperationen beinhalten, bevorzugt eine Destillation zur Abtrennung von nicht umgesetztem Alkohol.

Der nachfolgende Schritt b) wird erst dann durchgeführt, wenn in Schritt a) mindestens 50 % der im Tetrachlorbisphosphat enthaltenen P-Cl-Gruppen umgesetzt wurden. Der Umsatz der P-Cl-Gruppen kann analytisch verfolgt werden, bevorzugt mittels ³¹P-NMR-Spektroskopie.

Zur Durchführung des Schrittes b) wird die Base bevorzugt in einer Menge von 3,5 bis 8 mol-Äquivalent pro ein mol-Äquivalent Tetrachlorbisphosphat unter Durchmischung in Kontakt mit der in Schritt a) erhaltenen Reaktionsmischung gebracht.

Bevorzugt wird die Base in einer dosierfähigen Form in das Reaktionsgefäß des Schrittes a) eingebracht. Alternativ und ebenfalls bevorzugt wird die Base in geeigneter Form in einem zweiten Reaktionsgefäß vorgelegt und die Reaktionsmischung aus Schritt a) in dieses überführt.

Geeignete, und bevorzugte dosierfähige Formen der Base sind Pulver, Granulate, Lösungen oder Dispersionen.

Der Schritt b) wird bevorzugt bei Temperaturen zwischen 5 °C und 70 °C und bei Drücken zwischen 10 und 6000 mbar durchgeführt.

Der Schritt b) kann weitere, optionale Trennoperationen beinhalten, bevorzugt eine Destillation zur Abtrennung von nicht umgesetztem Alkohol aus Schritt a).

Im Schritt c) des erfindungsgemäßen Verfahrens wird das Reaktionsprodukt aus dem Chlorwasserstoff des Schrittes a) und der Base des Schrittes b), also das Salz NaCl und/oder KCl, zumindest teilweise in eine feste Form überführt. Bevorzugt kann man diesen Prozeß durch geeignete Maßnahmen unterstützen, bevorzugt durch das Absenken der Temperatur und/oder durch die Zugabe eines Lösungsmittels, in dem das Salz unlöslich ist. Typischer Weise scheidet sich das Salz jedoch spontan, also ohne eine weitere Maßnahme, in fester Form ab, wenn die Base des Schrittes b) mit der Reaktionsmischung aus Schritt a) in Kontakt gebracht wird.

Eine bevorzugte Ausführungsform des Verfahrens besteht darin, die Schritte b) und c) zumindest teilweise gleichzeitig durchzuführen.

Im Schritt d) des erfindungsgemäßen Verfahrens wird der Feststoff aus der Reaktionsmischung von Schritt c) abgetrennt. Bevorzugt wird dazu diese Reaktionsmischung nach einer an sich bekannten Methode in eine überwiegend Feststoff enthaltende Fraktion und eine überwiegend Flüssigkeit enthaltende Fraktion getrennt, besonders bevorzugt durch Filtrieren oder Zentrifugieren. Bevorzugt wird der feste Rückstand einmal oder mehrmals gewaschen, um anhaftende Produktreste isolieren zu können. Als Waschflüssigkeit sind alle Lösungsmittel geeignet, die die Salze NaCl und KCl nicht lösen.

Die im Schritt d) erhaltenen, flüssigen Fraktionen enthalten das Produkt und werden vereinigt. Sie können noch nicht umgesetzten Alkohol und Wasser sowie gegebenenfalls Lösungs- oder Dispersionsmittel enthalten und werden nach den im Stand der Technik beschriebenen Methoden, bevorzugt durch Destillation, Extraktion, Filtration, Klärung und/oder durch Trocknung mit einem Trockenmittel, zu reinem Tetraalkylbisphosphat aufgearbeitet.

Jeder einzelne der vier Schritte des Verfahrens kann diskontinuierlich oder kontinuierlich durchgeführt werden. Das gesamte Verfahren kann aus beliebigen Kombinationen von diskontinuierlich oder kontinuierlich durchgeführten Schritten bestehen.

Das erfindungsgemäße Verfahren gestattet die Synthese von Tetramethyldiethylenglycolbisphosphat und Tetraethyldiethylenglycolbisphosphat in besserer Ausbeute als nach den Verfahren des Standes der Technik und in hoher Reinheit. Es unterscheidet sich von den bekannten Verfahren wesentlich dadurch, dass in der Aufarbeitung keine Wasserphase abgetrennt wird, was insbesondere bei wasserlöslichen Tetraalkylbisphosphaten zu Ausbeuteverlusten führt. Überraschend ist, dass die Abtrennung der salzartigen Nebenpordukte so vollständig gelingt, dass das Endprodukt nur einen sehr niedrigen Salzgehalt aufweiset. Ein niedriger Salzgehalt im Sinne der vorliegenden Erfindung bedeutet, dass die durch den Salzgehalt bedingte Konzentration an Metallionen im Endprodukt weniger als 5000 ppm pro Metallion beträgt.

Anhand der nachfolgende Beispiele wird die Erfindung näher erläutert, ohne dass dadurch eine Einschränkung der Erfindung bewirkt werden soll. Die angegebenen Teile beziehen sich auf das Gewicht.

Zur Klarstellung sei angemerkt, dass vom Rahmen der vorliegenden Erfindung alle vorstehend aufgeführten, allgemeinen oder in Vorzugsbereichen genannten Definitionen und Parameter in beliebigen Kombinationen umfasst sind.

### Beispiele

### Beispiel 1: Herstellung von Diethylenglycol-bis(dichlorphosphat) (nicht erfindungsgemäß)

In einem 1000-ml-Vierhalskolben mit Rührer, Thermometer, Tropftrichter mit Druckausgleich und Rückflusskühler wurden 984,3 g Phosphorylchlorid bei 20 °C vorgelegt. Dann wurde ein Vakuum von etwa 670 mbar angelegt und innerhalb von 4 h wurden 332,3 g Diethylenglykol zugetropft. Durch Kühlung im Eiswasserbad wurde die Temperatur bei 20 °C gehalten. Es bildete sich eine klare, farblose Reaktionsmischung. Nach beendeter Dosierung wurde der Druck bis auf etwa 6 mbar abgesenkt und 16 h bei 25 °C nachgerührt. Danach verblieben 1055,7 g (98 %) Diethylenglycol-bis(dichlorphosphat).

### Beispiel 2: Herstellung von Tetraethyldiethylenglycolbisphosphat (nicht erfindungsgemäß)

In einem 1000-ml-4-Halskolben wurden unter N₂ 105,8 g Ethanol und 178,9 g Pyridin bei 15 °C vorgelegt. Bei dieser Temperatur wurden innerhalb von 75 min 169,8 g Diethylenglycolbis(dichlorphosphat) aus Beispiel 1 zugetropft. Die Reaktionsmischung zeigte eine exotherme Reaktion sowie eine weiße Ausfällung von Pyridinhydrochlorid. Mittels Eiswasserbadkühlung bei wurde die Temperatur bei 15 °C bis 20 °C gehalten. Die weiße Suspension wurde 4 h bei 15 °C bis 20 °C nachgerührt und 16 h bei 23 °C stehen lassen. Dann wurde die Suspension auf 0 °C abgekühlt, 60 min nachgerührt und abgesaugt. Der weiße Salzrückstand wurde gut abgepresst, mit Ethanol gewaschen und anschließend verworfen. Die farblose Produktlösung wurde unter Vakuum am Rotationsverdampfer eingeengt. Die entstandene weiße Suspension wurde abgesaugt, die Salzpaste mit wenig Aceton gewaschen, gut abgepresst und verworfen. Die erhaltene farblose Flüssigkeit mit 200 ml Wasser versetzt und unter Vakuum am Rotationsverdampfer eingeengt. Dabei bildete sich ein weißer Kristallbelag aus sublimiertem Pyridinhydrochlorid am oberen Drittel der Destillationsblase und im vorderen Teil der Destillationsbrücke aus.

| | |
|---|---|
| Ausbeute | 170,3 g (90 %) schwach rötliche, klare Flüssigkeit |
| Säurezahl | 17,15 mg KOH/g |

### Beispiel 3: Herstellung von Tetraethyldiethylenglycolbisphosphat (erfindungsgemäß)

In einem 1000-ml-Vierhalskolben mit Rührer, Thermometer, Tropftrichter mit Druckausgleich und Rückflusskühler wurden unter Stickstoffatmosphäre 350 ml Ethanol bei 20 °C vorgelegt. Bei dieser Temperatur wurden innerhalb von 30 min 169,8 g Diethylenglycol-bis(dichlorphosphat) aus Beispiel 1 zugetropft. Durch Einwerfen von Trockeneispellets wurde die Temperatur bei 10 °C gehalten. Die farblose Lösung wurde 4 h bei 15 °C nachgerührt. Dann wurde in die farblose und klare Syntheselösung innerhalb von 30 min 106 g Natriumcarbonat eingetragen. Die Temperatur wurde durch Kühlung im Eiswasserbad bei 20 °C gehalten. Nach 16 h war die Gasentwicklung zum Stillstand gekommen. Die weiße Suspension wurde über einen Büchner-Trichter abgesaugt. Der weiße Salzrückstand wurde mit Ethanol gewaschen und verworfen. Die vereinigten Produktlösungen wurden unter Vakuum am Rotationsverdampfer eingeengt. Um das Produkt zu klären, wurde es noch über einen Büchner-Trichter abgesaugt.

| | |
|---|---|
| Ausbeute | 183,5 g (97 %) farblose Flüssigkeit |
| Säurezahl | < 0,1 mg KOH/g |
| Natriumgehalt | 4960 ppm |

### Beispiele 4: Herstellung von Tetraethyldiethylenglycolbisphosphat (erfindungsgemäß)

In einem 1000-ml-Vierhalskolben mit Rührer, Thermometer, Tropftrichter mit Druckausgleich und Rückflusskühler wurden unter Stickstoffatmosphäre 169,8 g Diethylenglycol-bis(dichlorphosphat) aus Beispiel 1 bei 20 °C vorgelegt. Bei dieser Temperatur wurden innerhalb von 30 min 350 ml Ethanol zugetropft. Durch Einwerfen von Trockeneispellets wurde die Temperatur bei 10 °C gehalten. Die farblose Lösung wurde 4 h bei 15 °C nachgerührt. Dann wurde in die farblose und klare Syntheselösung innerhalb von 30 min 106 g Natriumcarbonat eingetragen. Die Temperatur wurde durch Kühlung im Eiswasserbad bei 20 °C gehalten. Nach 16 h war die Gasentwicklung zum Stillstand gekommen. Die weiße Suspension wurde über einen Büchner-Trichter abgesaugt. Der weiße Salzrückstand wurde mit Ethanol gewaschen und verworfen. Die vereinigten Produktlösungen wurden am Rotationsverdampfer eingeengt. Um das Produkt von Salzresten zu befreien, wurde es noch über einen Büchner-Trichter abgesaugt.

| | |
|---|---|
| Ausbeute | 181,8 g (96 %) farblose Flüssigkeit |
| Säurezahl | < 0,1 mg KOH/g |
| Natriumgehalt | 4265 ppm |

### Beispiel 5: Herstellung von Tetraethyldiethylenglycolbisphosphat (erfindungsgemäß)

In einem 1000-ml-Vierhalskolben mit Rührer, Thermometer, Tropftrichter mit Druckausgleich und Rückflusskühler wurden unter Stickstoffatmosphäre bei 20 °C 350 ml Ethanol vorgelegt. Bei dieser Temperatur wurden innerhalb von 125 min 169,8 g Diethylenglycol-bis(dichlorphosphat) aus Beispiel 1 zugetropft. Durch Kühlung im Eiswasserbad wurde die Temperatur bei 10 °C gehalten. Die farblose Lösung wurde 3 h bei 15 °C nachgerührt. Dann wurde in die farblose und klare Syntheselösung innerhalb von 30 min 153 g einer 50%igen, wässrigen Natriumhydroxidlösung getropft. Die Temperatur wurde durch Kühlung im Eiswasserbad bei 20 °C gehalten. Die weiße Suspension wurde über einen Büchner-Trichter abgesaugt. Der weiße Salzrückstand wurde mit Ethanol gewaschen und verworfen. Die vereinigten Produktlösungen wurden am Rotationsverdampfer eingeengt und der dabei verbleibende Rückstand wurde über einen Faltenfilter filtriert.

| | |
|---|---|
| Ausbeute | 182,3 g (96 %) farblose Flüssigkeit |
| Säurezahl | 0,12 mg KOH/g |
| Natriumgehalt | 4270 ppm |

### Beispiel 6: Herstellung von Tetraethyldiethylenglycolbisphosphat (erfindungsgemäß)

In einem 1000-ml-Vierhalskolben mit Rührer, Thermometer, Tropftrichter mit Druckausgleich und Rückflusskühler wurden unter Stickstoffatmosphäre bei 20 °C 350 ml Ethanol vorgelegt. Bei dieser Temperatur wurden innerhalb von 125 min 169,8 g Diethylenglycol-bis(dichlorphosphat) aus Beispiel 1 zugetropft. Durch Kühlung im Eiswasserbad wurde die Temperatur bei 10 °C gehalten. Die farblose Lösung wurde 3 h bei 15 °C nachgerührt. Dann wurde in die farblose und klare Syntheselösung innerhalb von 30 min 153 g einer 50%igen, wässrigen Natriumhydroxidlösung getropft. Die Temperatur wurde durch Kühlung im Eiswasserbad bei 20 °C gehalten. Die weiße Suspension wurde über einen Büchner-Trichter abgesaugt. Der weiße Salzrückstand wurde mit Ethanol gewaschen und verworfen. Die vereinigten Produktlösungen wurden am Rotationsverdampfer eingeengt. Der trübe Rückstand wurde in 80 ml Wasser aufgelöst und mit 110 ml Dichlormethan extrahiert. Der Extrakt wurde im Vakuum am Rotationsverdampfer eingeengt und der dabei erhalte Rückstand wurde von wenig Feststoff abfiltriert.

| | |
|---|---|
| Ausbeute | 170,3 g (90 %) farblose Flüssigkeit |
| Säurezahl | < 0,1 mg KOH/g |
| Natriumgehalt | 605 ppm |

### Beispiel 7: Herstellung von Tetramethyldiethylenglycolbisphosphat (erfindungsgemäß)

Nach dem in Beispiel 2 angegebenen Verfahren wurde aus 250 ml Methanol und 169,8 g Diethylenglycol-bis(dichlorphosphat) aus Beispiel 1 Tetramethyldiethylenglycolbisphosphat hergestellt.

| | |
|---|---|
| Ausbeute | 140,2 g (87 %) farblose Flüssigkeit |
| Säurezahl | < 0,1 mg KOH/g |
| Natriumgehalt | 4630 ppm |

### Beispiel 8: Herstellung von Tetra-n-butyldiethylenglycolbisphosphat (erfindungsgemäß)

Nach dem in Beispiel 4 angegebenen Verfahren wurde aus 550 ml n-Butanol und 169,8 g Dimethyl-englycol-bis(dichlorphosphat) aus Beispiel 1 Tetra-n-butyldiethylenglycolbisphosphat hergestellt.

| | |
|---|---|
| Ausbeute | 225,7 g (92 %) farblose Flüssigkeit |
| Säurezahl | < 0,1 mg KOH/g |
| Natriumgehalt | 3955 ppm |

### Beispiel 9: Herstellung von 1,4-Butandiol-bis(dichlorphosphat) (nicht erfindungsgemäß)

In einem 500-ml-Vierhalskolben mit Rührer, Thermometer, Tropftrichter mit Druckausgleich und Rückflusskühler wurden 300,0 g Phosphorylchlorid bei 20 °C vorgelegt. Dann wurde bei einem Vakuum von 200 mbar innerhalb von 45 min 45,0 g 1,4-Butandiol zugetropft. Durch Kühlung im Eiswasserbad wurde die Temperatur bei 20 °C gehalten. Es bildete sich eine klare, farblose Reaktionsmischung. Nach beendeter Dosierung wurde der Druck auf etwa 100 mbar abgesenkt und 2 h nachgerührt. Anschließend wurde eine Destillationsbrücke aufgebaut und der Überschuss an Phosphorylchlorid abdestilliert. Danach verblieben 144,9 g (91 %) 1,4-Butandiol-bis-(dichlorphosphat).

### Beispiel 10: Herstellung von Tetraethyl-1,4-butandiolbisphosphat (erfindungsgemäß)

Nach dem in Beispiel 4 angegebenen Verfahren wurde aus 350 ml Ethanol und 161,6 g 1,4-Butandiol-bis(dichlorphosphat) aus Beispiel 9 Tetraethyl-1,4-butandiolbisphosphat hergestellt.

| | |
|---|---|
| Ausbeute | 158,3 g (87 %) farblose Flüssigkeit |
| Säurezahl | 0,3 mg KOH/g |
| Natriumgehalt | 4085 ppm |

### Beispiel 11: Löslichkeit von Tetraalkylbisphosphaten in Wasser (erfindungsgemäß)

50,0 g Tetraalkylbisphosphat und 50,0 g voll entsalztes Wasser wurden in einen Scheidetrichter eingewogen, kräftig geschüttelt und dann für 1 h stehen gelassen. Wenn sich eine Phasentrennung zeigte, wurde die untere, wässrige Phase sorgfältig abgetrennt und ausgewogen (m_{w}). Die wässrige Phase wurde im Vakuum am Rotationsverdampfer bis zur Gewichtskonstanz eingeengt und der Rückstand wurde ebenfalls ausgewogen (m_{R}). Als Maß für die Löslichkeit in Wasser wurde die Größe m_{R}/m_{W} × 100 % berechnet und in Tabelle 1 aufgelistet.

Bei den Substanzen Tetramethyldiethylenglycolbisphosphat und Tetraethyldiethylenglycolbisphosphat fand im oben beschriebenen Versuch keine Phasentrennung statt. Weitere Versuche mit anderen Gewichtsverhälnissen von Tetraalkylbisphosphat und Wasser ergaben bei diesen Substanzen ebenfalls keine Phasentrennung. Das bedeutet, dass Tetramethyldiethylenglycolbisphosphat und Tetraethyldiethylenglycolbisphosphat vollständig wasserlöslich sind.

**Tabelle 1 Löslichkeit von Tetraalkylbisphosphaten in Wasser**

| **Tetraalkylbisphosphat** | **m_{R}/m_{W}** × **100** % |
|---|---|
| Tetraethyldiethylenglycolbisphosphat (Beispiele 3 - 6) | Keine Phasentrennung |
| Tetramethyldiethylenglycolbisphosphat (Beispiel 7) | Keine Phasentrennung |
| Tetra-n-butyldiethylenglycolbisphosphat (Beispiel 8) | 3% |
| Tetraethyl-1,4-butandiolbisphosphat Beispiel (10) | 26% |

### Auswertung

Beispiel 11 zeigt, dass die betrachteten Tetraalkylbisphosphate ganz oder teilweise mit Wasser mischbar sind. Daher sind diese Substanzen nach den Herstellverfahren aus dem Stand der Technik nur in schlechter Ausbeute oder gar nicht herstellbar. Die Beispiele 3 bis 8 und 10 zeigen, dass Tetraalkylbisphosphate nach dem erfindungsgemäßen Verfahren einfach und in hoher Ausbeute hergestellt werden können. Dabei werden Produkte hoher Reinheit erhalten, wie sich an den niedrigen Säurezahlen und Natriumgehalten ablesen lässt. Überraschend ist, dass die Herstellung gerade bei teilweise oder vollständig wasserlöslichen Tetraalkylbisphosphaten erfolgreich möglich ist.

Entsalztes Wasser im Sinne der vorliegenden Erfindung ist gekennzeichnet, indem es eine Leitfähigkeit von 0,1 bis 10 µS besitzt, wobei der Gehalt an gelösten oder ungelösten Metallionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

## Patentansprüche

1. Verfahren zur Herstellung von Tetramethyldiethylenglycolbisphosphat oder Tetraethyldiethylenglycolbisphosphat, **dadurch gekennzeichnet, dass** man
a) ein Tetrachlorbisphosphat der allgemeinen Formel (I) 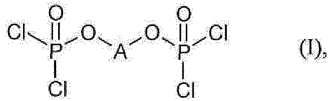 worin
A für -CH₂CH₂-O-CH₂CH₂- steht,
mit einem Alkohol ausgewählt aus der Reihe Methanol und Ethanol umsetzt,
b) wenn in Schritt a) mindestens 50 % der im Tetrachlorbisphosphat enthaltenen P-Cl-Gruppen umgesetzt wurden die Reaktionsmischung aus Schritt a) mit einer Base enthaltend eine 10 - 60 Gew.-%ige wässrige Lösung von Natriumhydroxid, Natriumcarbonat, Kaliumhydroxid und/oder Kaliumcarbonat oder ein pulverförmiges Natriumcarbonat, Natriumhydrogencarbonat, Kaliumcarbonat und/oder Kaliumhydrogencarbonat mit einer mittleren Teilchengröße von 0,1 µm bis 2000 µm umsetzt,
c) das in Schritt b) gebildeten Salz NaCl und/oder KCl bei einer Temperatur zwischen 5 °C und 70 °C und bei einem Druck zwischen 10 und 6000 mbar als Feststoff ausfällt und
d) den Feststoff NaCl und/oder KCl von der in Schritt c) erhaltenen Mischung abtrennt.

2. Verfahren nach Anspruch 1, **dadurch gekennzeichnet, dass** die Base in einer Menge von 3,5 bis 8 mol-Äquivalent pro ein mol-Äquivalent Tetrachlorbisphosphat eingesetzt wird.

3. Verfahren nach Anspruch 1, **dadurch gekennzeichnet, dass** die Base in Form eines Pulvers mit einer mittleren Teilchengröße von 0,1 µm bis 2 000 µm eingesetzt wird.

4. Verfahren nach Anspruch 1, **dadurch gekennzeichnet, dass** die Schritte b) und c) zumindest teilweise gleichzeitig durchgeführt werden.

5. Verfahren nach Anspruch 1, **dadurch gekennzeichnet, dass** mindestens einer der Schritte a) bis e) diskontinuierlich durchgeführt wird.

6. Verfahren nach Anspruch 1, **dadurch gekennzeichnet, dass** mindestens einer der Schritte a) bis e) kontinuierlich durchgeführt wird.

7. Verfahren nach Anspruch 1, **dadurch gekennzeichnet, dass** das Tetraalkylbisphosphat vollständig oder teilweise wasserlöslich ist.

## Claims

1. Process for preparing tetramethyldiethylene glycol bisphosphate or tetraethyldiethylene glycol bisphospate, **characterized in that**
a) a tetrachlorobisphosphate of the general formula (I) 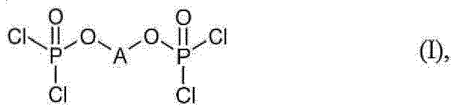 in which
A is -CH₂CH₂-O-CH₂CH₂-,
is reacted with an alcohol selected from the group consisting of methanol and ethanol,
b) when in step a) at least 50% of the P-Cl groups present in the tetrachlorobisphosphate have reacted, the reaction mixture from step a) is reacted with a base comprising a 10%-60% strength by weight aqueous solution of sodium hydroxide, sodium carbonate, potassium hydroxide and/or potassium carbonate or a powderous sodium carbonate, sodium hydrogencarbonate, potassium carbonate and/or potassium hydrogencarbonate having a mean particle size from 0.1 µm to 2000 µm,
c) the salt NaCl and/or KCl formed in step b) is precipitated as a solid at a temperature between 5°C and 70°C and at a pressure between 10 and 6000 mbar, and
d) the solid NaCl and/or KCl is isolated from the mixture obtained in step c).

2. Process according to Claim 1, **characterized in that** the base is used in an amount of 3.5 to 8 mole equivalent per mole equivalent of tetrachlorobisphosphate.

3. Process according to Claim 1, **characterized in that** the base is used in the form of a powder having an average particle size of 0.1 µm to 2000 µm.

4. Process according to Claim 1, **characterized in that** steps b) and c) are carried out at least partly simultaneously.

5. Process according to Claim 1, **characterized in that** at least one of steps a) to e) is carried out discontinuously.

6. Process according to Claim 1, **characterized in that** at least one of steps a) to e) is carried out continuously.

7. Process according to Claim 1, **characterized in that** the tetraalkyl bisphosphate is fully or partly water-soluble.

## Revendications

1. Procédé de fabrication de bisphosphate de tétraméthyldiéthylène glycol ou de bisphosphate de tétraéthyldiéthylène glycol, **caractérisé en ce que**
a) un bisphosphate de tétrachlore de formule générale (I) 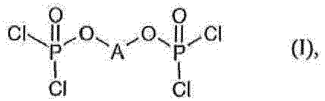 dans laquelle
A représente CH₂CH₂-O-CH₂CH₂-,
est mis en réaction avec un alcool choisi dans la série constituée par le méthanol et l'éthanol,
b) lorsqu'au moins 50 % des groupes P-Cl contenus dans le bisphosphate de tétrachlore ont été transformés à l'étape a), le mélange réactionnel de l'étape a) est mis en réaction avec une base contenant une solution aqueuse de 10 à 60 % en poids d'hydroxyde de sodium, de carbonate de sodium, d'hydroxyde de potassium et/ou de carbonate de potassium ou un carbonate de sodium, hydrogénocarbonate de sodium, carbonate de potassium et/ou hydrogénocarbonate de potassium en poudre ayant une taille de particule moyenne de 0,1 µm à 2 000 µm,
c) le sel NaCl et/ou KCl formé à l'étape b) est précipité sous forme solide à une température comprise entre 5 °C et 70 °C et à une pression comprise entre 10 et 6 000 mbar, et
d) le solide NaCl et/ou KCl est séparé du mélange obtenu à l'étape c).

2. Procédé selon la revendication 1, **caractérisé en ce que** la base est utilisée en une quantité de 3,5 à 8 équivalents molaires pour un équivalent molaire de bisphosphate de tétrachlore.

3. Procédé selon la revendication 1, **caractérisé en ce que** la base est utilisée sous la forme d'une poudre ayant une taille de particule moyenne de 0,1 µm à 2 000 µm.

4. Procédé selon la revendication 1, **caractérisé en ce que** les étapes b) et c) sont réalisées au moins en partie simultanément.

5. Procédé selon la revendication 1, **caractérisé en ce qu'**au moins une des étapes a) à e) est réalisée de manière discontinue.

6. Procédé selon la revendication 1, **caractérisé en ce qu'**au moins une des étapes a) à e) est réalisée en continu.

7. Procédé selon la revendication 1, **caractérisé en ce que** le bisphosphate de tétraalkyle est entièrement ou partiellement soluble dans l'eau.
